# EUROPÄISCHE PATENTANMELDUNG

(11) **EP 1 201 362 A1**
(43) Veröffentlichungstag der Anmeldung: **02.05.2002**
(21) Anmeldenummer: 01125789.6
(22) Anmeldetag: 29.10.2001
(51) Int. Cl.: B24B 19/02, B24B 47/14, B23C 3/28, B24B 41/04

(54) **Werkzeug zur Bearbeitung von Flächen in Bohrungen**

(30) Priorität: 31.10.2000 DE 10054122
(71) Anmelder: REINECKER KOPP Werkzeugmaschinen GmbH, 89231 Neu-Ulm (DE)
(72) Erfinder: Hessbrüggen, Norbert, 73107 Eschenbach (DE); Wernz, Christoph, 70174 Stuttgart (DE)
(74) Vertreter: Zmyj, Erwin, Dipl.-Ing., Dipl.-Wirtsch.-Ing., European Patent Attorney

(57) **Zusammenfassung**

Das Werkzeug umfasst eine an einem Haltearm (4) gelagerte Werkzeugscheibe (5), die einen Werkzeugscheibengrundkörper (6) mit am Außenrand angeordnetem Bearbeitungskörper (7) aufweist. Dieser Bearbeitungskörper ist bei einer Ausführungsvariante als Schleifkörper ausgebildet. Ein Basiskörper zur Aufnahme der Lagerung ist einstückig mit dem Haltearm (4) ausgebildet, der auch die Versorgungsleitungen (8) für die hydrodynamische Lagerung und den hydraulischen Antrieb aufweist. Eine Werkzeug-Zentrierschnittstelle (11) ermöglicht das Voreinstellen der Werkzeuge außerhalb der Werkzeugmaschine.

## Beschreibung

Die Erfindung bezieht sich auf ein Werkzeug zur Bearbeitung von Flächen, insbesondere Vertiefungen, in Bohrungen von Werkstücken, mit einer an einem Haltearm drehbar gelagerten Werkzeugscheibe, deren Durchmesser die Abmessung des Haltearmes quer zur Längsrichtung desselben übersteigt.

Aus der DE 419 416 C ist eine Schleifvorrichtung mit Turbinenantrieb bekannt, bei der die Turbinenräder zum Antrieb der Schleifscheibe offen liegen, so dass das Antriebsmittel frei austritt. Weiterhin steht die Schleifscheibe zu beiden Seiten des Haltearmes in beträchtlichem Maße hervor, so dass dieser in Bezug auf den Schleifscheibendurchmesser dünne Haltearm, der obendrein noch gabelförmig ausgebildet ist, nicht die notwendige Steifigkeit aufweist, die für eine genaue Bearbeitung erforderlich ist. Weiterhin ist durch das offene Anblasen oder Anspritzen der Turbinenschaufeln die Leistungsübertragung begrenzt, weshalb eine im Durchmesser verhältnismäßig große Turbine zum Einsatz kommt, die eine noch größere Schleifscheibe bedingt, so dass bei der Bearbeitung von Flächen in Bohrungen Beschränkungen hinsichtlich des Innendurchmessers dieser Bohrungen bestehen.

Aufgabe der Erfindung ist es, ein Werkzeug der angegebenen Art so auszugestalten, dass bei einem verhältnismäßig geringen konstruktiven Aufwand kleine Außenabmessungen für die spanabhebende Bearbeitung innerhalb kleiner Bohrungen und verhältnismäßig große spanabhebende Leistungen erzielbar sind.

Diese Aufgabe wird bei einem Werkzeug der Eingangs angegebenen Art erfindungsgemäß dadurch gelöst, dass die Werkzeugscheibe einen hohlen Werkzeugscheibengrundkörper mit im wesentlichen rotationssymmetrischer Gestalt und am Außenumfang desselben angeordneten Bearbeitungskörper besteht, dass der Werkzeugscheibengrundkörper zusammen mit einem am Haltearm vorgesehenen Basiskörper ein Gehäuse zur Aufnahme der Lagerung und des Antriebes für die Werkzeugscheibe bilden, dass der Durchmesser der Werkzeugscheibe die Abmessungen des Haltearmes quer zur Längsrichtung des selben nur um wenig mehr als es der Vertiefung innerhalb der Bohrung des Werkstückes entspricht, übersteigt und dass die Werkzeugscheibe nur an einer Seite des Haltearmes über diesen hervorsteht.

Unter Vertiefung wird eine Nut oder ein Innengewinde verstanden.

Die Erfindung ermöglicht eine Bearbeitung von Längsnuten in engen Bohrungen mit achsparalleler oder schräger Ausrichtung der Nuten zur Bohrungsachse sowie das Bearbeiten von Gewindegängen, weil diese Ausgestaltung kompakte Außenmaße bietet. Da die Werkzeugscheibe nur geringfügig größer ist als dies der Abmessung des Haltearmes entspricht, weist dieser eine hohe Stabilität auf, wodurch ein schwingungsfreies Bearbeiten von Werkstücken möglich ist. Durch das Zusammenwirken von der hohlen rotationssymmetrischen Werkzeugscheibe mit dem Basiskörper des Haltearmes wird eine Ausgestaltung geschaffen, die nicht nur kompakte Außenmaße, sondern auch eine geschützte Anordnung der Lagerungen des Antriebs bietet.

Da die Werkzeugscheibe nur an einer Seite des Haltearmes über diesen hervorsteht, können besonders enge Bohrungen bearbeitet werden, da ein Freiraum zwischen Halter und Innenbohrung nur an der einen Seite erforderlich ist, an der die Werkzeugscheibe über den Haltearm hervorsteht.

Durch die Ausgestaltung der Werkzeugscheibe als hohlen rotationssymmetrischen Körper wird die Voraussetzung geschaffen, dass der Bearbeitungskörper als Schleifkörper oder als Fräser ausgebildet sein kann.

Eine besonders vorteilhafte Ausgestaltung im Hinblick auf die Erzielung kompakter Außenmaße ergibt sich dann, wenn der Werkzeugscheibengrundkörper halbkugelförmig oder kegelstumpfförmig ausgebildet ist. Diese Ausgestaltung ist insbesondere in Verbindung mit der Ausbildung des Antriebes als hydraulischer Antrieb vorteilhaft, weil auf diese Weise der zur Verfügung stehende Raum besonders gut für die Antriebsteile und auch für die Lagerteile genutzt werden kann.

Weiterhin ist es vorteilhaft, wenn am Außenrand des Werkzeugscheibengrundkörpers einstückig ein vorspringender wulstförmiger Schleifmaterialträger angeformt ist, wobei Schleifmaterialträger und Schleifmaterial den Bearbeitungskörper bilden. Diese Ausgestaltung führt insbesondere dann zu einer kompakten Ausführungsform, wenn in Weiterbildung der Erfindung der Werkzeugscheibengrundkörper und Schleifmaterialträger als Metallkörper ausgebildet sind und das Schleifmaterial galvanisch auf dem Schleifmaterialträger aufgebracht ist. Das Schleifmaterial kann auch mittels keramischer Bindung, metallischer Bindung oder mittels Kunstharzbindung auf dem Schleifmaterialträger aufgebracht sein. Das Schleifmaterial kann aus kubischem Bornitrid oder Diamant bestehen. Der Metallkörper ist vorzugsweise aus Stahl gebildet. Ein solches als Schleifwerkzeug ausgestattetes Werkzeug hat nicht nur kompakte Außenmaße, sondern auch aufgrund des verwendeten Schleifmaterials eine sehr hohe Standzeit.

Bei einer Abnutzung der Schleifscheibe oder des Fräsers kann aufgrund der erfindungsgemäßen Ausgestaltung ein Austausch leicht vorgenommen werden, weil hier der Werkzeugscheibengrundkörper mit dem angeformten Bearbeitungskörper als Einheit leicht auswechselbar mit den übrigen Teilen des Werkzeuges verbunden ist.

Eine weitere Vereinfachung des konstruktiven Aufbaus ist dadurch gegeben, dass der Basiskörper einstückig mit dem Haltearm ausgebildet ist, der Versorgungsleitungen für den Antrieb und/oder die Lagerung aufnimmt.

Wenn in weiterer Ausgestaltung der Erfindung die Lagerung der Werkzeugscheibe als hydrodynamische Lagerung ausgebildet ist und der Antrieb für die Werkzeugscheibe als hydraulischer Antrieb ausgebildet ist, so kann das für den hydraulischen Antrieb benötigte Öl als Schmiermittel für die hydrodynamische Lagerung der Werkzeugscheibe dienen, was den konstruktiven Aufwand insgesamt verringert. Durch die Verwendung eines hydraulischen Antriebes können bei geringen Abmessungen sehr hohe Drehmomente und damit große Leistungen auf die Werkzeugscheibe übertragen werden. Der hydraulische Antrieb für ein solches Werkzeug hat auch noch gegenüber den mechanischen Antrieben den Vorteil, dass bei einem plötzlichen Stop der Werkzeugscheibe keine Beschädigung des Antriebs auftreten kann, wie dies bei den mechanischen Antrieben aufgrund von Massenkräften der Fall ist.

Es ist vorteilhaft, wenn der Haltearm mit einer Werkzeug-Zentrierschnittstelle, zur Festlegung an einer Werkzeugmaschine, ausgerüstet ist, da hierdurch die Werkzeuge voreingestellt werden können.

Die Erfindung wird nachfolgend anhand von in der Zeichnung dargestellten Ausführungsbeispielen näher erläutert. In der Zeichnung zeigen:
- **Figur 1:**: eine Seitenansicht eines Werkzeuges mit durch strichpunktierte Linien angedeutetem Werkstück;
- **Figur 2:**: eine um 90° gedrehte Ansicht auf das Werkzeug nach Figur 1;
- **Figur 3:**: einen Schnitt durch das in Figur 1 schematisch angedeutete Werkstück in vergrößerter Darstellung;
- **Figur 4:**: eine gegenüber den Figuren 1 und 2 abgeänderte Ausführungsform;
- **Figur 5:**: eine Frontalansicht in Achsrichtung der Werkzeughalterung;
- **Figur 6:**: eine gegenüber Figur 1 abgeänderte Ausführungsform einer Werkzeugscheibe in vergrößertem Maßstab.

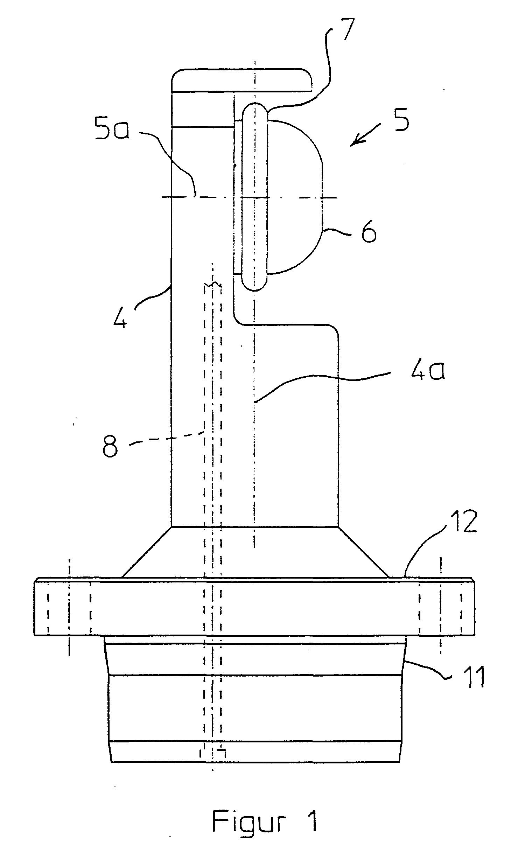

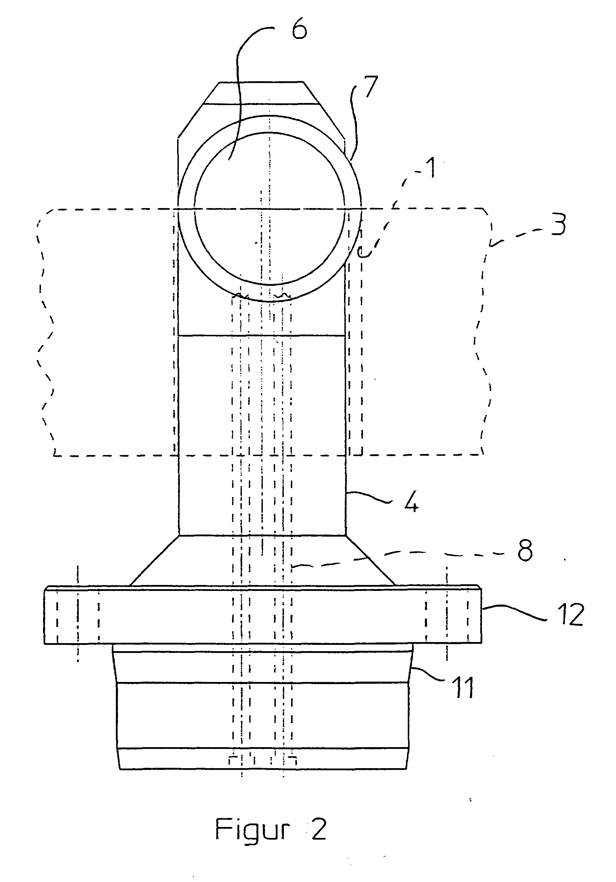

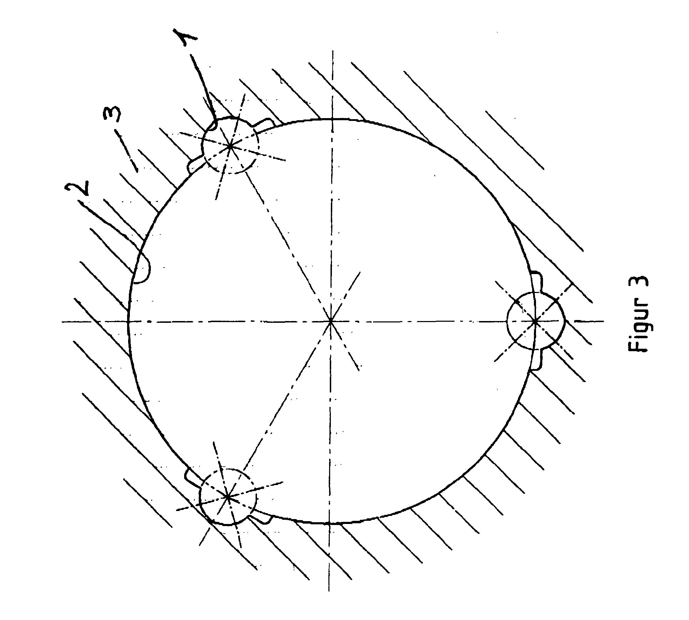

Das in den Figuren 1 und 2 dargestellte Werkzeug ist als Schleifwerkzeug ausgebildet und dient insbesondere zur Bearbeitung von Nuten 1 innerhalb einer Innenbohrung 2, eines Werkstückes 3, das in Figur 2 mit gestrichelten Linien angedeutet und im Schnitt in vergrößerter Darstellung in Figur 3 gezeigt ist.

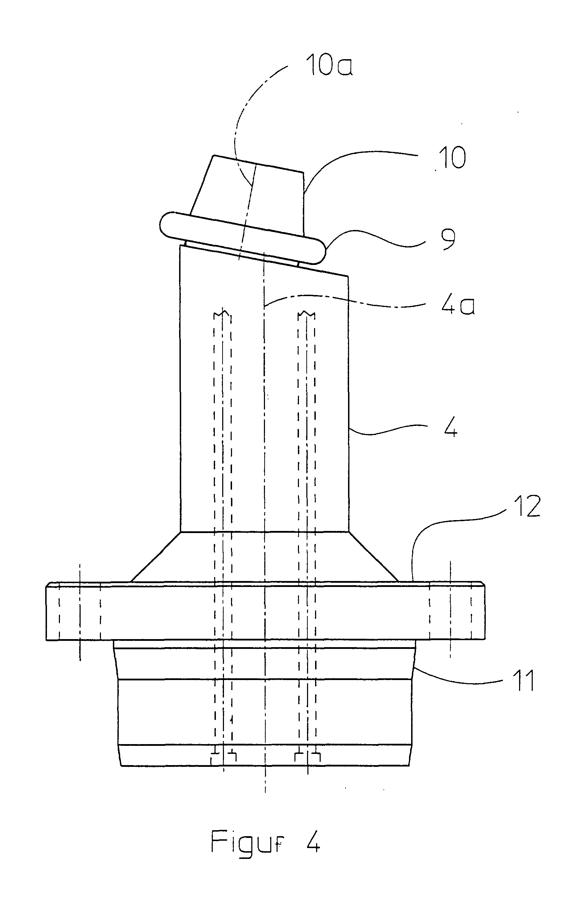

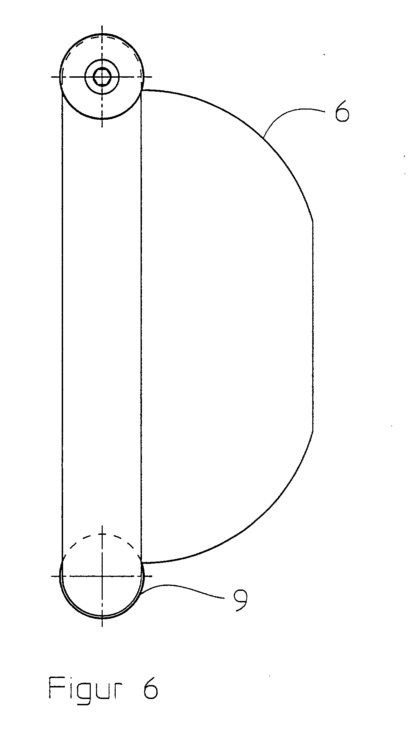

Wie aus den Figuren 1 und 2 sowie 4 ersichtlich, umfasst das Werkzeug einen Haltearm 4 und eine insgesamt mit 5 bezeichnete Werkzeugscheibe, die einen Werkzeugscheibengrundkörper 6 aufweist. Die Längsachse des Haltearmes ist mit 4a bezeichnet und schließt bei der Ausführungsform nach den Figuren 1 und 2 mit der Lagerachse 5a der Werkzeugscheibe 5, die in diesem Falle als Schleifscheibe ausgebildet ist, einen rechten Winkel ein. Am Außenumfang des Werkzeugscheibengrundkörpers 6 ist einstückig ein Schleifmaterialträger 7 ausgebildet und trägt beispielsweise galvanisch aufgebrachtes, kubisches Bornitrid. Der Schleifmaterialträger 7 und die aufgebrachten harten Teilchen aus Bornitrid bilden den Bearbeitungskörper beziehungsweise denjenigen Teil des Schleifwerkzeuges, welcher im Eingriff mit dem zu bearbeitenden Werkstück steht. Der Werkzeugscheibengrundkörper 6 besteht aus Metall, vorzugsweise Stahl und ist bei der Ausführungsform nach den Figuren 1 und 2 und bei der Ausführungsform nach Figur 6 im wesentlichen als rotationssymmetrischer, halbkugelförmiger Hohlkörper ausgebildet. Bei dem Ausführungsbeispiel nach Figur 4 ist der Werkzeugscheibengrundkörper kegelstumpfförmig ausgebildet und mit dem Bezugszeichen 10 bezeichnet. Im Falle der Ausführungsformen nach den Figuren 4 bis 6 ist anstelle des Schleifmaterialträgers 7 am Außenrand des Werkzeugscheibengrundkörpers 6 ein Fräser 9 vorgesehen. Bei der Ausführungsform nach den Figuren 1 und 2 kann der Schleifmaterialträger 7 durch einen Fräser ersetzt sein.

Der Werkzeugscheibengrundkörper 6 bzw. 10 bildet ein Gehäuse für einen Antrieb und die Lagerung des Werkzeugscheibengrundkörpers 6 bzw. 10 und damit des Bearbeitungskörpers 7 bzw. 9, wobei dieser sichtbare Teil des Gehäuses, der mit 6 bzw. 10 bezeichnet ist, mit einem Basiskörper zusammenwirkt, der durch den Haltearm 4 gebildet ist. Innerhalb dieses Haltearmes 4 sind Versorgungsleitungen 8 vorgesehen, die Hydrauliköl zum Antriebsmotor leiten, der als hydraulischer Antriebsmotor ausgebildet ist und außerdem wird hierdurch auch die Lagerung versorgt, die als hydrodynamische Lagerung gestaltet ist.

Wie aus Figur 2 ersichtlich, ist die Werkzeugscheibe 5 beim vorliegenden Ausführungsbeispiel also die Schleifscheibe 5 so am Haltearm 4 angeordnet, daß sie nur an einer Seitenkante entsprechend der radialen Ausdehnung des wulstförmigen Schleifmaterialträgers 7 übersteht. Hierdurch kann die gegenüberliegende Seite des Halters 4 beim Einführen in die Bohrung 2 des Werkstückes 3 nahezu an der Innenwand 2 anliegen, wenn eine der Nuten 1 bearbeitet werden soll.

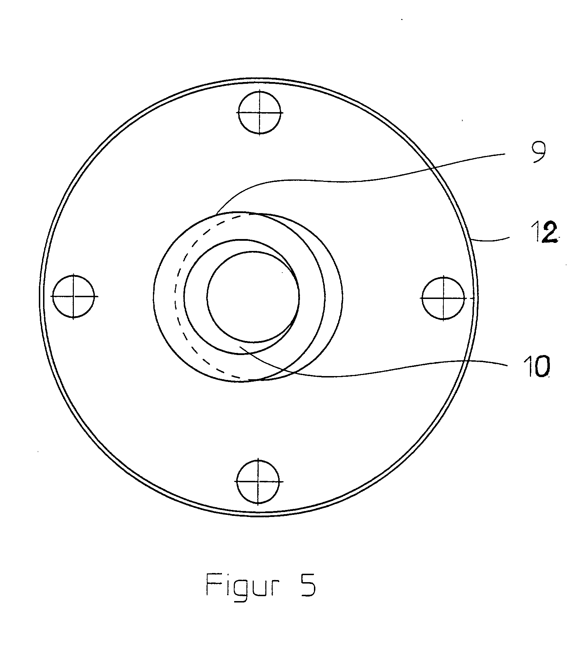

Bei dem Werkzeug gemäß Figur 4 und 5 bildet die mit 10a bezeichnete Lagerachse der Werkstückscheibe 10 mit der Längsachse 4a des Haltearmes 4 einen spitzen Winkel. Die winkelmäßige Einstellung der Lagerachse zur Längsachse des Haltearmes hängt von dem Einsatzgebiet des jeweiligen Werkzeuges ab. Auch hier kann der Fräser so angeordnet sein, dass er nur an einer Seitenkante des Haltearmes 4 über diesen hinausragt.

Mit 11 ist eine Werkzeug-Zentrierschnittstelle bezeichnet, die unmittelbar an einem Befestigungsflansch 12 am Ende des Haltearmes 4 ausgebildet ist. Hierdurch können die Werkzeuge voreingestellt werden, so dass sie nach der Befestigung des Werkzeuges mittels des Befestigungsflansches 12 an einer entsprechenden Werkzeugmaschine bereits die für die Bearbeitung notwendige Einstellung aufweisen.

## Patentansprüche

1. Werkzeug zur Bearbeitung von Flächen, insbesondere Vertiefungen, in Bohrungen von Werkstücken, mit einer an einem Haltearm drehbar gelagerten Werkzeugscheibe, deren Durchmesser die Abmessungen des Haltearmes quer zur Längsrichtung desselben übersteigt, **dadurch gekennzeichnet, dass** die Werkzeugscheibe (5) einen hohlen Werkzeugscheibengrundkörper (6,10) mit im wesentlichen rotationssymmetrischer Gestalt und am Außenumfang desselben angeordnetem Bearbeitungskörper (7,9) besteht, dass der Werkzeugscheibengrundkörper (6,10) zusammen mit einem am Haltearm (4) vorgesehenen Basiskörper ein Gehäuse zur Aufnahme der Lagerung und des Antriebes für die Werkzeugscheibe (5) bilden, dass der Durchmesser der Werkzeugscheibe (5) die Abmessungen des Haltearmes (4) quer zur Längsrichtung desselben nur um wenig mehr als es der Vertiefung innerhalb der Bohrung des Werkzeuges entspricht, übersteigt, und dass die Werkzeugscheibe (5) nur an einer Seite des Haltearmes (4) über diesen hervorsteht.

2. Werkzeug nach Anspruch 1, **dadurch gekennzeichnet, dass** der Bearbeitungskörper als Schleifkörper (7) ausgebildet ist.

3. Werkzeug nach Anspruch 1, **dadurch gekennzeichnet, dass** der Bearbeitungskörper als Fräser(9) ausgebildet ist.

4. Werkzeug nach einem der Ansprüche 1 bis 3, **dadurch gekennzeichnet, dass** der Werkzeugscheibengrundkörper (6) halbkugelförmig ausgebildet ist.

5. Werkzeug nach einem der Ansprüche 1 bis 3, **dadurch gekennzeichnet, dass** der Werkzeugscheibengrundkörper (10) kegelstumpfförmig ausgebildet ist.

6. Werkzeug nach einem der Ansprüche 1 oder 2 oder 4 oder 5, **dadurch gekennzeichnet, dass** am Außenrand des Werkzeugscheibengrundkörpers (6) einstückig ein vorspringender, wulstförmiger Schleifmaterialträger (7) angeformt ist, der Schleifmaterial trägt, wobei Schleifmaterialträger (7) und Schleifmaterial den Bearbeitungskörper bilden.

7. Werkzeug nach Anspruch 6, **dadurch gekennzeichnet, dass** der Werkzeugscheibengrundkörper (6) und der Schleifmaterialträger (7) als Metallkörper ausgebildet sind und das Schleifmaterial galvanisch auf dem Schleifmaterialträger aufgebracht ist.

8. Werkzeug nach Anspruch 6, **dadurch gekennzeichnet, dass** das Schleifmaterial mittels keramischer Bindung auf dem Schleifmaterialträger (7) aufgebracht ist.

9. Werkzeug nach Anspruch 6, **dadurch gekennzeichnet, dass** das Schleifmaterial mittels metallischer Bindung auf dem Schleifmaterialträger (7) aufgebracht ist.

10. Werkzeug nach einem der Ansprüche 6, **dadurch gekennzeichnet, dass** das Schleifmaterial mittels Kunstharzbindung auf dem Schleifmaterialträger aufgebracht ist.

11. Werkzeug nach einem der Ansprüche 7 bis 10, **dadurch gekennzeichnet, dass** das Schleifmaterial aus kubischem Bornitrid besteht.

12. Werkzeug nach einem der Ansprüche 7bis 10, **dadurch gekennzeichnet, dass** das Schleifmaterial aus Diamant besteht.

13. Werkzeug nach einem der Ansprüche 7bis 12, **dadurch gekennzeichnet, dass** der Metallkörper aus Stahl gebildet ist.

14. Werkzeug nach einem der Ansprüche 1 bis 13, **dadurch gekennzeichnet, dass** der Antrieb für die Werkzeugscheibe (5) als hydraulischer Antrieb ausgebildet ist.

15. Werkzeug nach einem der Ansprüche 1 bis 14, **dadurch gekennzeichnet, dass** die Lagerung der Werkzeugscheibe (5) als hydrodynamische Lagerung ausgebildet ist.

16. Werkzeug nach einem der Ansprüche 1 bis 15, **dadurch gekennzeichnet, dass** der Basiskörper einstückig mit dem Haltearm (4) ausgebildet ist, der Versorgungsleitungen (8) für den Antrieb und/oder die Lagerung aufnimmt.

17. Werkzeug nach einem der Ansprüche 1 bis 16, **dadurch gekennzeichnet, dass** der Halterarm (4) mit einer Werkzeug-Zentrierschnittstelle (11) zur Festlegung an einer Werkzeugmaschine ausgerüstet ist.
